# EUROPÄISCHE PATENTANMELDUNG

(11) **EP 2 950 234 A1**
(43) Veröffentlichungstag der Anmeldung: **02.12.2015**
(21) Anmeldenummer: 14169939.7
(22) Anmeldetag: 27.05.2014
(51) Int. Cl.: G06K 7/00

(54) **Manipulationssicherer Kartenleser mit einer aufgedruckten Bohrschutz-Leiterbahnstruktur**

(71) Anmelder: ddm hopt + schuler GmbH & Co. KG., 78628 Rottweil (DE)
(72) Erfinder: Karl-Rudolf Hopt, 78628 Rottweil (DE)
(74) Vertreter: Kohler Schmid Möbus Patentanwälte

(57) **Zusammenfassung**

Bei einem Kartenleser (1) zum Datenaustausch mit einer Chipkarte (2), der ein Kartenlesergehäuse (5) mit einer Karteneinführöffnung (4) und eine im Kartenlesergehäuse (5) angeordnete Kontaktiereinheit (6) zum Datenaustausch mit einer durch die Karteneinführöffnung (4) in das Kartenlesergehäuse (5) eingeführten Chipkarte (2), aufweist, ist erfindungsgemäß vorgesehen, dass das Kartenlesergehäuse (5) eine die Kontaktiereinheit (6) aufnehmende Gehäusewanne (10) aus Kunststoff und eine die Wannenöffnung verschließende Leiterplatte (11) aufweist, dass die Gehäusewanne (10) innenseitig mit einer Bohrschutzfolie (12) hinterspritzt ist, deren Folieninnenseite flächendeckend eine nicht-selbsttragende Bohrschutz-Leiterbahnstruktur (13) aufweist, und die Leiterplatte (11) flächendeckend eine Bohrschutz-Leiterbahnstruktur (14) aufweist, und dass die Leiterplatte (11) ringsum mit dem Wannenrand (19) und mit der Bohrschutz-Leiterbahnstruktur (13) der hinterspritzten Bohrschutzfolie (12) verklebt ist.

## Beschreibung

Die vorliegende Erfindung betrifft einen Kartenleser zum Datenaustausch mit einer Chipkarte, mit einem Kartenlesergehäuse, das eine Karteneinführöffnung aufweist, und mit einer im Kartenlesergehäuse angeordneten Kontaktiereinheit zum Datenaustausch mit einer durch die Karteneinführöffnung in das Kartenlesergehäuse eingeführten Chipkarte.

Ein derartiger Kartenleser ist beispielsweise durch die DE 10 2009 026 466 B3 bekannt geworden.

Dieser bekannte Kartenleser weist ein Kunststoffspritzteil in Form einer Bohrschutzhaube mit einer daran vorgesehenen Bohrschutz-Leiterbahnstruktur auf. Die Bohrschutzhaube ist ein spritzgegossenes Kunststoffteil, dessen Innenseite eine metallisierte Mäander-Leiterbahnstruktur als Bohrschutz aufweist. Dazu wurde auf die Innenseite vollflächig bzw. flächendeckend mit einem Laser eine Mäanderbahnstruktur (ca. 0,15 mm Bahnbreite) im Abstand von ca. 0,25 mm abgetragen. Nach dieser Laserstrukturierung wurde das Kunststoffteil metallisiert (10±4 µm chem. CU; 6±2 µm chem. Ni; >0,06µm Au). Durch die nun metallisierte Bohrschutz-Leiterbahnstruktur ist auf der gesamten Innenseite zwischen zwei Anschlusskontakten eine durchgehende elektrische Leiterbahn gelegt. Wenn die Bohrschutzhaube zu Manipulationszwecken durchbohrt oder abgeschliffen wird, wird dabei auch die durchgehende Leiterbahn durchtrennt, über die im Betrieb ein Strom fließt. Dies wird von einer Überwachungseinheit erkannt, die dann keinen Lesevorgang mehr zulässt bzw. den Kartenleser außer Funktion setzt.

Dieses bekannte Verfahren zum Herstellen einer Bohrschutz-Leiterbahnstruktur an einem Kunststoffspritzteil ist aufgrund der Laserstrukturierung und der anschließenden Metallisierung mit hohem Kosten- und Zeitaufwand verbunden. Außerdem ist nicht auszuschließen, dass nach Abschleifen des Kunststoffs der Bohrschutzhaube die Leiterbahn doch unzerstört stehen bleibt und der Manipulationsversuch somit nicht erkannt wird.

Es ist demgegenüber die Aufgabe der vorliegenden Erfindung, einen Kartenleser der eingangs genannten Art noch manipulationssicherer zu machen.

Diese Aufgabe wird erfindungsgemäß dadurch gelöst, dass das Kartenlesergehäuse eine die Kontaktiereinheit aufnehmende Gehäusewanne aus Kunststoff und eine die Wannenöffnung verschließende Leiterplatte aufweist, dass die Gehäusewanne innenseitig mit einer Bohrschutzfolie hinterspritzt ist, deren Folieninnenseite flächendeckend eine nicht-selbsttragende Bohrschutz-Leiterbahnstruktur aufweist, und die Leiterplatte flächendeckend eine Bohrschutz-Leiterbahnstruktur aufweist, und dass die Leiterplatte ringsum mit dem Wannenrand und mit der Bohrschutz-Leiterbahnstruktur der hinterspritzten Bohrschutzfolie verklebt ist.

Erfindungsgemäß ist die Bohrschutzfolie an ihrer Folienaußenseite mit der Gehäusewanne stoffschlüssig verbunden bzw. verschmolzen, ohne dass dabei die an der Folieninnenseite vorhandene nicht-selbsttragende Bohrschutz-Leiterbahnstruktur beschädigt wird. Wenn die Gehäusewanne durchbohrt wird, wird dabei ihre Bohrschutz-Leiterbahnstruktur zerstört und ein Stromkreis unterbrochen. Wenn von außen die Gehäusewanne abgeschliffen wird, wird dadurch zwangsläufig auch die nicht-selbsttragende Bohrschutz-Leiterbahnstruktur zerstört und ebenfalls ein Stromkreis unterbrochen. Die Stromkreisunterbrechung wird von einer Überwachungseinheit der Leiterplatte erkannt, die dann keinen Lesevorgang mehr zulässt bzw. die Kontaktiereinheit außer Funktion setzt.

Besonders bevorzugt ist die nicht-selbsttragende Bohrschutz-Leiterbahnstruktur mit elektrisch leitender Tinte, insbesondere mit Silbertinte, auf eine flexible Trägerfolie der Bohrschutzfolie aufgedruckt. Die Trägerfolie ist eine hinterspritzbare Kunststofffolie und beispielsweise eine PET-Folie. Wenn von außen zuerst die Gehäusewanne und anschließend auch die Trägerfolie der Bohrschutzfolie abgeschliffen wird, wird dadurch zwangsläufig auch die von der Trägerfolie getragene Bohrschutz-Leiterbahnstruktur der Bohrschutzfolie zerstört und der Stromkreis unterbrochen.

Je dünner die Linienstärke der Leiterbahnen und je geringer der Linienabstand.zwischen den Leiterbahnen der Bohrschutz-Leiterbahnstruktur ist, desto besser ist der Manipulationsschutz. Vorzugsweise beträgt die Linienstärke der Leiterbahnen der Bohrschutz-Leiterbahnstruktur höchstens 0,2 mm, insbesondere höchstens 0,15 mm, und der Linienabstand zwischen den einzelnen Leiterbahnen der Bohrschutz-Leiterbahnstruktur höchstens 0,3 mm, insbesondere höchstens 0,2 mm.

Vorteilhaft weist die hinterspritzte Bohrschutzfolie einen Anschlussabschnitt, z.B. in Form einer Folienfahne, auf, der mit der Leiterplatte bzw. mit einer Überwachungseinheit der Leiterplatte verbunden ist.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: den erfindungsgemäßen manipulationssicheren Kartenleser;
- Fig. 2: den Kartenleser von Fig. 1, aber noch ohne eine in Fig. 1 gezeigte Abdeck-Leiterplatte;
- Fign. 3a, 3b: eine Bohrschutzfolie als ebener Folienzuschnitt (Fig. 3a) und mit abgewinkelten Seitenrändern (Fig. 3b); und
- Fig. 4: eine mit der in Fig. 3b gezeigten Bohrschutzfolie hinterspritzten Gehäusewanne des Kartenlesergehäuses.

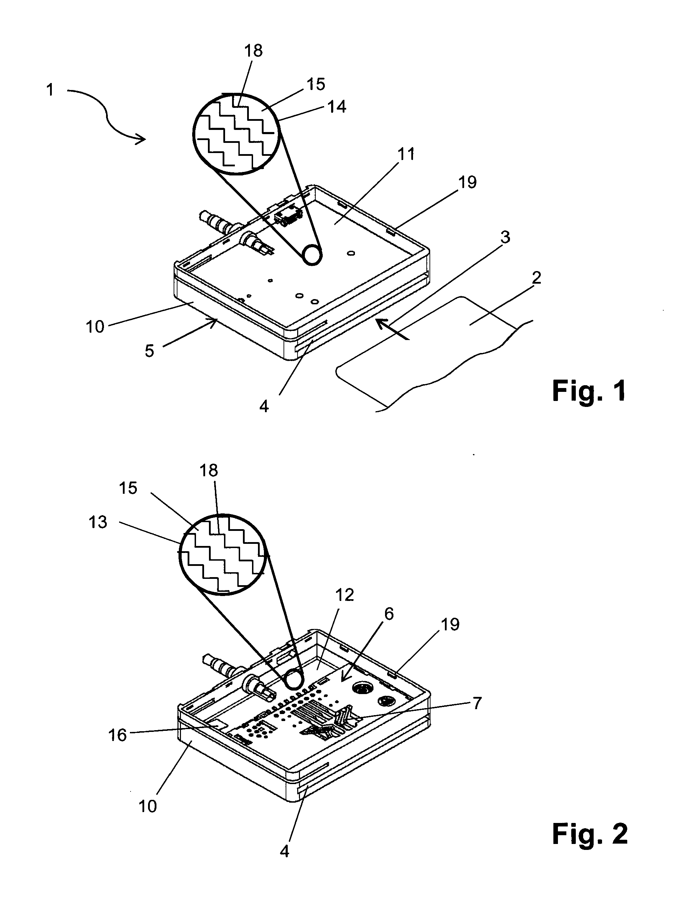

Der in **Fig. 1** gezeigte Kartenleser **1** ist ein so genannter Push/Pull-Kartenleser, bei dem eine Chipkarte **2** durch den Benutzer in Einführrichtung **3** über eine Karteneinführöffnung **4** in ein Kartenlesergehäuse **5** bis in die Datenaustauschposition eingeführt und nach dem Datenaustausch vom Benutzer wieder aus dem Kartenleser 1 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind. Im Kartenlesergehäuse 5 ist eine Kontaktiereinheit **6** (Fig. 2) zum Datenaustausch mit der durch die Karteneinführöffnung **4** in das Kartenlesergehäuse 5 eingeführten Chipkarte 2 angeordnet.

Wie in Fig. 2 gezeigt, weist die Kontaktiereinheit 6 mehrere elastisch verformbare Kontaktfedern **7** auf, die mit ihren freien Kontaktenden in die Kartenbahn hineinragen. Durch die eingeführte Chipkarte 2 werden die freien Kontaktenden der Kontaktfedern aus der Kartenbahn ausgelenkt und kontaktieren die elektrischen Kontaktfelder der Chipkarte 2.

Das Kartenlesergehäuse 5 weist eine die Kontaktiereinheit 6 aufnehmende Gehäusewanne **10** aus Kunststoff und eine die Wannenöffnung verschließende Leiterplatte **11** auf. Die Gehäusewanne 10 ist innenseitig mit einer Bohrschutzfolie **12** hinter-spritzt, deren Folieninnenseite flächendeckend eine nicht-selbsttragende mäanderförmige Bohrschutz-Leiterbahnstruktur **13** aufweist. Auch die Leiterplatte 11 weist flächendeckend eine mäanderförmige Bohrschutz-Leiterbahnstruktur **14** auf.

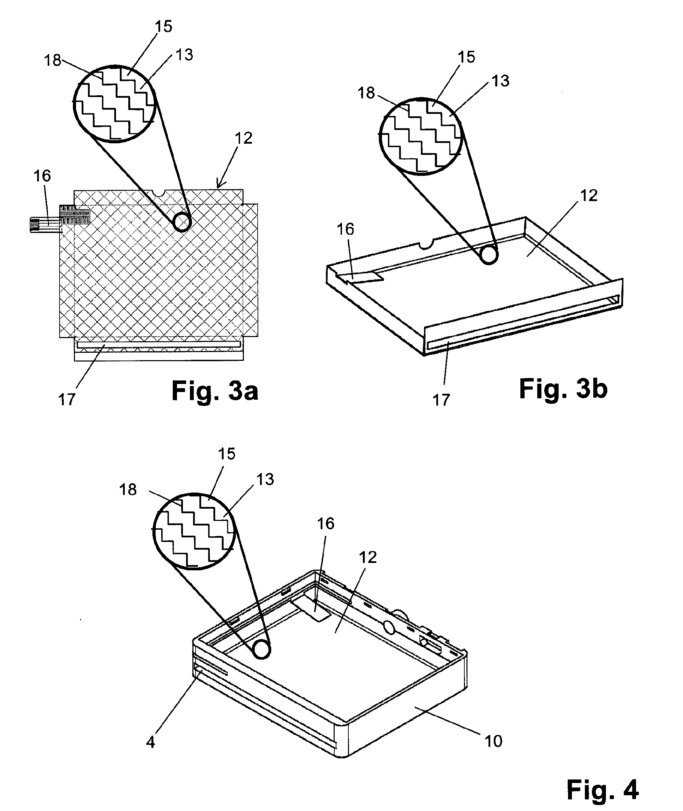

Die Bohrschutzfolie 12 ist in **Fig. 3a** als ebener Folienzuschnitt und in **Fig. 3b** mit abgewinkelten Seitenrändern gezeigt. Die Bohrschutzfolie 12 ist durch eine flexible Trägerfolie **15** aus z.B. PET gebildet, auf deren eine Folienseite die mäanderförmige Bohrschutz-Leiterbahnstruktur 13 mit elektrisch leitender Silbertinte flächendeckend aufgedruckt ist. Die aufgedruckte Bohrschutz-Leiterbahnstruktur 13 ist somit nicht selbsttragend. Die Bohrschutzfolie 12 weist an einem hochgestellten Seitenrand eine Folienfahne als Anschlussabschnitt **15** und an einem anderen hochgestellten Seitenrand eine der Karteneinführöffnung 4 entsprechende Folienöffnung 17 auf. Die Bohrschutz-Leiterbahnstruktur 13 ist auf der gesamten einen Folienseite zwischen zwei Anschlusskontakten des Anschlussabschnitts 15 als mindestens eine durchgehende elektrische Leiterbahn **18** mit der Silbertinte aufgedruckt. Die Linienstärke der aufgedruckten Leiterbahnen 17 beträgt höchstens 0,2 mm, insbesondere höchstens 0,15 mm, und der Linienabstand zwischen den aufgedruckten Leiterbahnen 17 beträgt höchstens 0,3 mm, insbesondere höchstens 0,2 mm.

In Fig. 3b sind die Seitenränder der Bohrschutzfolie 12 rechtwinklig abgewinkelt, wobei sich die aufgedruckte Bohrschutz-Leiterbahnstruktur 13 innenseitig befindet. Die Bohrschutzfolie 12 wird dann in das Spritzwerkzeug der Gehäusewanne 10 eingelegt, und beim anschließenden In-Mold-Spritzgießvorgang wird die Gehäusewanne 10 innenseitig mit der Bohrschutzfolie 12 hinterspritzt, wie in **Fig. 4** gezeigt ist. Genauer gesagt wird beim Spritzgießvorgang die Trägerfolie 15 der Bohrschutzfolie 12 außenseitig mit der Gehäusewanne 10 stoffschlüssig verbunden bzw. verschmolzen, aber die innenseitig aufgedruckte Bohrschutz-Leiterbahnstruktur 13 durch den Spritzgießvorgang nicht beschädigt.

Dann wird die Kontaktiereinheit 6 in die Gehäusewanne 10 positionsgenau eingelegt (Fig. 2) und der Anschlussabschnitt 15 mit der Leiterplatte 11 verbunden. Abschließend wird die Wannenöffnung der Gehäusewanne 10 mit der Leiterplatte 11 verschlossen, wobei die Leiterplatte 11 ringsum mit dem Wannenrand **19** und mit der aufgedruckten Bohrschutz-Leiterbahnstruktur 13 der Bohrschutzfolie 12 verklebt ist Wenn die Gehäusewanne 10 oder die Leiterplatte 11 durchbohrt werden, wird dabei ihre Bohrschutz-Leiterbahnstruktur 13, 14 zerstört und ein Stromkreis unterbrochen. Dies wird von einer Überwachungseinheit (nicht gezeigt) der Leiterplatte 11 erkannt, die dann keinen Lesevorgang mehr zulässt bzw. die Kontaktiereinheit 6 außer Funktion setzt. Wenn von außen der Kunststoff der Gehäusewanne 10 und schließlich auch die Trägerfolie 15 der Bohrschutzfolie 12 abgeschliffen werden, wird dadurch zwangsläufig auch die von der Trägerfolie 15 getragene Bohrschutz-Leiterbahnstruktur 13 der Bohrschutzfolie 12 zerstört und ein Stromkreis unterbrochen. Auch dies wird von der Überwachungseinheit erkannt, die dann keinen Lesevorgang mehr zulässt bzw. die Kontaktiereinheit 6 außer Funktion setzt. Eine unbemerkte Manipulation am Kartenleser 1 ist somit nicht möglich, wodurch ein "sicherer Kartenleser (secure card reader)" bereitgestellt ist.

## Patentansprüche

1. Kartenleser (1) zum Datenaustausch mit einer Chipkarte (2),
mit einem Kartenlesergehäuse (5), das eine Karteneinführöffnung (4) aufweist, und mit einer im Kartenlesergehäuse (5) angeordneten Kontaktiereinheit (6) zum Datenaustausch mit einer durch die Karteneinführöffnung (4) in das Kartenlesergehäuse (5) eingeführten Chipkarte (2),
**dadurch gekennzeichnet,**
**dass** das Kartenlesergehäuse (5) eine die Kontaktiereinheit (6) aufnehmende Gehäusewanne (10) aus Kunststoff und eine die Wannenöffnung verschließende Leiterplatte (11) aufweist,
**dass** die Gehäusewanne (10) innenseitig mit einer Bohrschutzfolie (12) hinterspritzt ist, deren Folieninnenseite flächendeckend eine nicht-selbsttragende Bohrschutz-Leiterbahnstruktur (13) aufweist, und die Leiterplatte (11) flächendeckend eine Bohrschutz-Leiterbahnstruktur (14) aufweist, und
**dass** die Leiterplatte (11) ringsum mit dem Wannenrand (19) und mit der Bohrschutz-Leiterbahnstruktur (13) der hinterspritzten Bohrschutzfolie (12) verklebt ist.

2. Kartenleser nach Anspruch 1, **dadurch gekennzeichnet, dass** die nicht-selbsttragende Bohrschutz-Leiterbahnstruktur (13) mit elektrisch leitender Tinte, insbesondere mit Silbertinte, auf eine Trägerfolie (15) der Bohrschutzfolie (12) aufgedruckt ist.

3. Kartenleser nach einem der vorhergehenden Ansprüche, **dadurch gekennzeichnet, dass** die Linienstärke der Leiterbahnen (18) der Bohrschutz-Leiterbahnstruktur (13, 14) höchstens 0,2 mm, insbesondere höchstens 0,15 mm, beträgt.

4. Kartenleser nach einem der vorhergehenden Ansprüche, **dadurch gekennzeichnet, dass** der Linienabstand zwischen den Leiterbahnen (18) der Bohrschutz-Leiterbahnstruktur (13, 14) höchstens 0,3 mm, insbesondere höchstens 0,2 mm, beträgt.

5. Kartenleser nach einem der vorhergehenden Ansprüche, **dadurch gekennzeichnet, dass** die hinterspritzte Bohrschutzfolie (12) einen Anschlussabschnitt (16) aufweist, der mit der Leiterplatte (11) verbunden ist.

6. Kartenleser nach einem der vorhergehenden Ansprüche, **dadurch gekennzeichnet, dass** eine Seitenwand der Gehäusewanne (10) die Karteneinführöffnung (4) aufweist und die hinterspritzte Bohrschutzfolie (12) eine der Karteneinführöffnung (4) entsprechende Folienöffnung (17) aufweist.
